# EUROPÄISCHE PATENTSCHRIFT

(11) **EP 2 298 606 B1**
(45) Veröffentlichungstag und Bekanntmachung des Hinweises auf die Patenterteilung: **09.11.2011**
(21) Anmeldenummer: 09170812.3
(22) Anmeldetag: 21.09.2009
(51) Int. Cl.: B60R 13/02

(54) **Innenverkleidungsteil für einen Fahrgastraum eines Fahrzeugs sowie Verfahren zur seiner Herstellung**
Interior cladding part for a vehicle passenger area and production method
Elément d'habillage intérieur pour un espace passager d'un véhicule et son procédé de fabrication

(43) Veröffentlichungstag der Anmeldung: 23.03.2011
(73) Patentinhaber: Ford-Werke GmbH, 50735 Köln (DE); Georg Kaufmann Formenbau AG, 5453 Busslingen (CH)
(72) Erfinder: Someschan, Robert, 42781, Haan (DE); Berns, Rene, 50226, Frechen (DE); Drewe, Mark, 52134, Herzogenrath (DE); Kaufmann, Roger, 5453, Busslingen (CH)
(74) Vertreter: Lippert, Stachow & Partner

(56) Entgegenhaltungen:
- DE-A1-102004 025 570
- DE-B4-102004 023 823
- FR-A1- 2 855 782
- FR-A1- 2 886 571
- US-B1- 6 248 200

## Beschreibung

Die Erfindung betrifft ein Innenverkleidungsteil für einen Fahrgastraum eines Fahrzeugs, mit einem Formteil, das eine Vorderseite aufweist, welche eine dekorative Nutzschicht des Innenverkleidungsteils bildet und mit wenigstens einer Trägerschicht, welche eine Rückseite des Innenverkleidungsteils bildet, wobei zumindest ein Teilbereich des Innenverkleidungsteils mit wenigstens einer Stützstruktur versehen ist, die eine angenehme taktile Wahrnehmung an der Oberfläche des Teilbereichs schafft.

Die Erfindung betrifft außerdem ein Verfahren zur Herstellung des Innenverkleidungsteils, wobei das Innenverkleidungsteil eine Vorderseite mit einer dekorativen Nutzschicht und darunter wenigstens eine Trägerschicht aufweist, welche die Rückseite bildet, und wobei zumindest ein Teilbereich des Innenverkleidungsteils mit einer Stützstruktur versehen ist, die eine angenehme taktile Wahrnehmung an der Oberfläche des Teilbereichs schafft, umfassend folgenden Schritt: Herstellen eines Formteils mit einer dekorativen Nutzschicht und wenigstens einer Trägerschicht.

Die taktile Wahrnehmung ist die Sinneswahrnehmung über mechanische, thermische und schmerzempfindliche Rezeptoren der Nerven.

Die Nutzschicht kann beispielsweise eine Oberfläche aufweisen, die mit einem ästhetischen Muster versehen ist. Häufig werden narbige Lederoberflächen, Holzmaserungen oder andere natürliche Materialoberflächen oder auch Textiloberflächen imitiert.

Ein derartiges Innenverkleidungsteil wird vorzugsweise dort verwendet, wo ein Fahrgast im Betrieb des Fahrzeugs mit dem Innenverkleidungsteil in Berührung kommen kann. Beispielsweise kann eine Fahrzeugtür mit einem Innenverkleidungsteil versehen sein, das eine integrierte Armlehne aufweist. Das Innenverkleidungsteil kann auch eine ergonomische Funktion haben, wie es bei einer integrierten Armlehne der Fall ist, auf der sich der Fahrgast bequem abstützen können soll. Durch die Berührung gewinnt der Fahrgast eine taktile Wahrnehmung der Oberfläche des Innenverkleidungsteils. Weil er auch einen Druck auf die Oberfläche ausübt, ist unter der Oberfläche in der Regel eine Stützstruktur vorgesehen, welche die von außen einwirkende Kraft aufnehmen kann. Die Stützstruktur ist nachgiebig. Die Nachgiebigkeit ist für den Fahrgast ebenfalls fühlbar. Auf diese Weise vermittelt auch der unter der Oberfläche liegende Aufbau dem Fahrgast einen Sinneseindruck über die Qualität des Innenverkleidungsteils. Der Teilbereich des Innenverkleidungsteils, in dem eine taktile Wahrnehmung durch den Fahrgast erwartet wird, bildet eine Schnittstelle, an der die Sinneseindrücke erzeugt werden. Es ist bekannt, diesen Teilbereich des Innenverkleidungsteils mit einer Stützstruktur zu versehen, die weichelastisches Material enthält, beispielsweise Schaumstoff.

Aus der DE 10 2004 023 823 B4 ist ein Verfahren zur Herstellung eines Innenverkleidungsteils bekannt. Das danach hergestellte Innenverkleidungsteil weist eine Stützstruktur auf, bei der weicher Schaum in eine Kammer des Innenverkleidungsteils eingespritzt worden ist. Der Schaum erhält seine Gestalt, weil der Prozess in einem Formwerkzeug erfolgt.

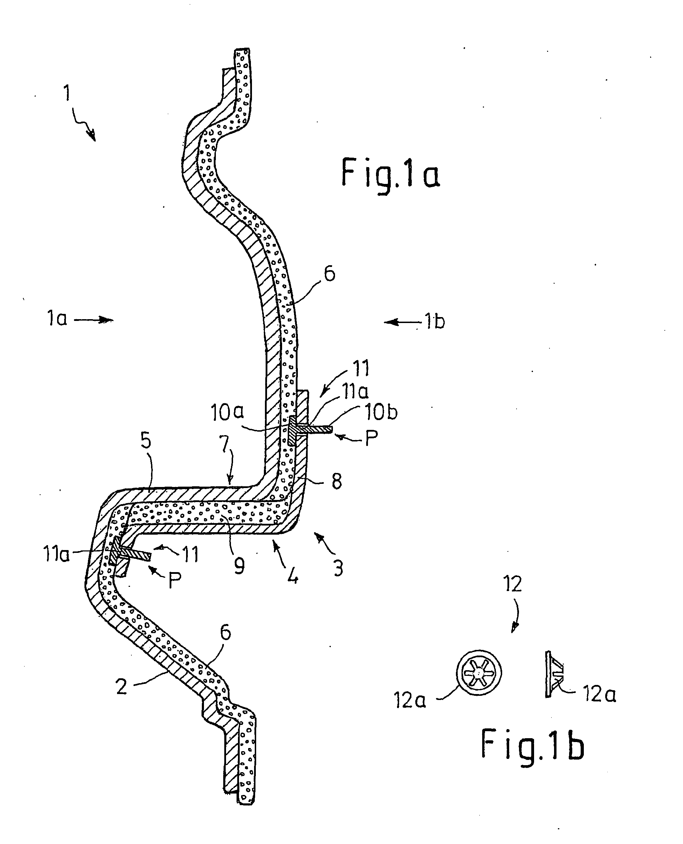

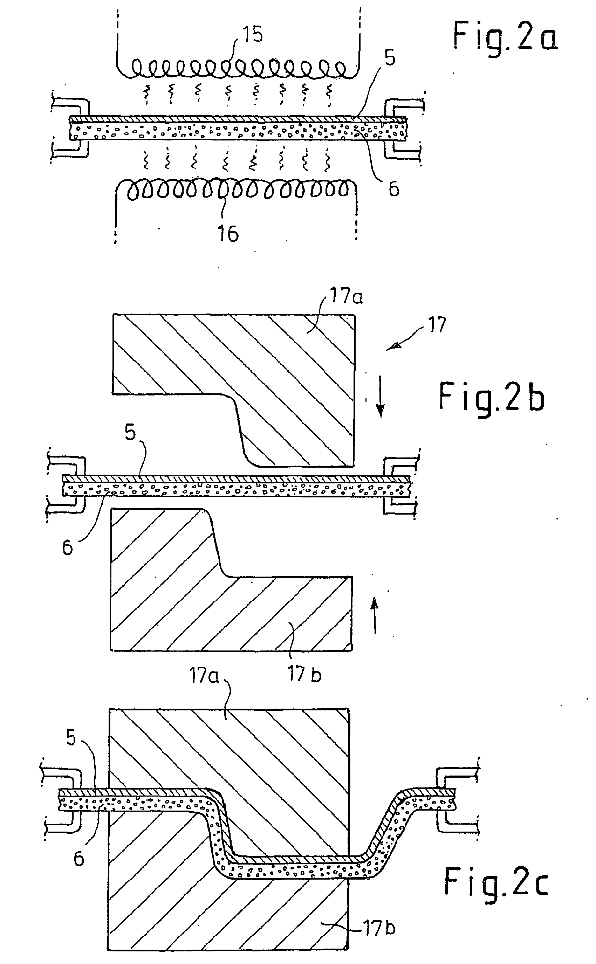

Ein anderes Verfahren zur Herstellung von Innenverkleidungsteilen wird in der EP 1 287 961 A2 vorgeschlagen. Diese enthält in den Figuren 1 und 2 zwei Beispiele für Innenverkleidungsteile, die nach diesem Verfahren herstellbar sind. Beide Beispiele weisen ebenfalls eine Stützstruktur auf, die mit Schaumstoff versehen ist. Der Schaumstoff wird jedoch nicht im Formwerkzeug geschäumt, sondern vorher aus einem Block zugeschnitten. Anschließend wird der Schaumstoffzuschnitt mit einem thermoplastischen Verfahren in dem Formwerkzeug unter Einsatz von Druck und Wärme zusammen mit einer Nutzschicht umgeformt und mit dieser verbunden. Bei dem Ausführungsbeispiel gemäß Fig. 2 soll es sich um ein Innenverkleidungsteil handeln, das einen besonders weichen Armlehnenbereich aufweist.

Aus der FR 2 855 782 A1 ist ein Verfahren zur Herstellung eines Verkleidungselements bekannt, umfassend ein Verbundmaterial mit einer ersten Schicht, die als Trägerschicht dient und eine höhere Härte aufweist, und mit mindestens einer weiteren Schicht aus einem weicheren Material, die sich mindestens über einen Teilbereich der ersten Schicht (Trägerschicht) erstreckt, wobei man zur Bildung der mindestens einen weiteren Schicht ein Pad aus einer Weichkomponente herstellt, welches sich nur über einen Teilbereich des Trägerteils erstreckt und danach Trägerteil und Pad vorzugsweise über eine Zwischenschicht mit einer Dekorschicht verbunden werden.

Die bekannten Verfahren trachten danach, ein Innenverkleidungsteil mit möglichst wenigen Herstellschritten herzustellen und Kosten zu mindern.

Der Erfindung liegt die Aufgabe zugrunde, ein alternatives Innenverkleidungsteil für einen Fahrgastraum eines Fahrzeugs vorzuschlagen, das mit verringertem technischem Aufwand herstellbar ist, sowie ein Verfahren vorzuschlagen, mit dem das Innenverkleidungsteil herstellbar ist.

Erfindungsgemäß wird die Aufgabe dadurch gelöst, dass das Formteil wenigstens ein Verbindungselement aufweist, welches an der Trägerschicht der Rückseite des Innenverkleidungsteils angebracht ist, dass die Stützstruktur als separates Stützelement ausgebildet und von dem Verbindungselement des Formteils gehalten ist.

Das Verbindungsmittel des Formteils kann während der Herstellung des Formteils im selben Schritt hergestellt werden oder in einem späteren Schritt an das Formteil angefügt werden.

Um das Anschlussmittel des Stützelements mit dem Verbindungselement des Formteils zu verbinden, sind unterschiedliche Methoden einsetzbar, beispielsweise Schweißen, Verrasten, Klemmen, Schrauben oder Kleben. Für jede der erwähnten Verbindungsarten können das Anschlussmittel sowie das Verbindungselement in besonderer Weise gestaltet sein, damit die gewünschte Verbindungsmethode begünstigt wird. Gegebenenfalls kann ein zusätzliches Element, beispielsweise eine Gewindemutter für eine Schraubverbindung, ein Klemmelement für eine Klemmverbindung oder ein Rastelement für eine Rastverbindung vorgesehen sein.

Das erfindungsgemäße Verfahren zur Herstellung umfasst folgende weitere Schritte: Einlegen des fertigen Formteils in ein Spritzgießwerkzeug, Anbringen wenigstens eines Verbindungselements in dem Teilbereich an der Rückseite des Innenverkleidungsteils durch Hinterspritzung der Trägerschicht mittels des Spritzgießwerkzeugs, Entnahme des hinterspritzten Formteils aus dem Spritzgießwerkzeug, Herstellen einer Stützstruktur als separates Stützelement mit wenigstens einem Anschlussmittel, passend zu dem an der Trägerschicht angebrachten Verbindungselement des Formteils, und Montage des Stützelements an dem Formteil durch Verbindung des Anschlussmittels des Stützelements mit dem Verbindungselement des Formteils.

Das vorgeschlagene Innenverkleidungsteil umfasst mehrere Bauteile. Ein Bauteil ist das vorgefertigte Formteil. Dieses bildet die Vorderseite des Innenverkleidungsteils. Es ist daher für die Ästhetik maßgeblich. Außerdem ist wenigstens ein weiteres Bauteil, nämlich das vorgefertigte Stützelement vorgesehen, das maßgeblich die Qualität desjenigen Teilbereichs beeinflusst, der für die taktile Wahrnehmung vorgesehen ist. Das Formteil ist das größere der Bauteile. Der Vorteil des mehrteiligen Aufbaus besteht darin, für das Formteil stets dieselben Herstellwerkzeuge verwenden zu können.

Das Formteil kann auf unterschiedliche Weise erzeugt werden, beispielsweise durch Spritzgießen eines thermoplastischen Trägerschichtmaterials gegen die Nutzschicht. Dazu wird zunächst die Nutzschicht in einen Formhohlraum eines Spritzgießwerkzeugs eingelegt und anschließend das thermoplastische Trägerschichtmaterial in den Formhohlraum eingespritzt. Dabei entsteht eine gleichmäßige Anbindung des Trägerschichtmaterials an der Nutzschicht. Eine andere Methode ist das Reaktionsspritzgießen. Dabei wird beispielsweise ein schäumendes Trägerschichtmaterial in einen Formhohlraum eines Spritzgießwerkzeugs geleitet. Das schäumende Trägerschichtmaterial reagiert und expandiert in dem Formhohlraum. Auch hierbei ist zuvor eine Nutzschicht in den Formhohlraum eingelegt worden. Auch dabei entsteht eine gleichmäßige Anbindung des geschäumten Trägerschichtmaterials an der Nutzschicht. Außerdem kann jedes andere geeignete Verfahren verwendet werden, um das Formteil herzustellen. Wenn das Verbindungselement nicht bereits während der Herstellung des Formteils erzeugt worden ist, muss gewährleistet sein, dass sich das vorgefertigte Formteil eignet, um später ein Verbindungselement an seiner Rückseite anbringen zu können, beispielsweise durch Hinterspritzung in einem dafür vorgesehenen Spritzgießwerkzeug.

Das kleinere Bauteil, nämlich das Stützelement, kann in mehreren Varianten hergestellt werden, die jeweils unterschiedliche Qualitäten aufweisen. Ein wichtiges Qualitätsmerkmal des Innenverkleidungsteils ist die Nachgiebigkeit und Festigkeit desjenigen Teilbereichs, der für eine Berührung durch den Fahrgast vorgesehen ist. Das an der Rückseite dieses Teilbereichs des Innenverkleidungsteils angebrachte Stützelement hat dabei einen großen Einfluss auf die taktile Wahrnehmung durch den Fahrgast.

Der mehrteilige Aufbau erlaubt es, Stützelemente unterschiedlicher Nachgiebigkeit mit immer demselben Formteil zu kombinieren. So kann für Fahrzeuge, die eine Luxusausstattung erhalten sollen, ein aufwändiges Stützelement vorgesehen werden, während für ein Fahrzeug, das eine Grundausstattung erhalten soll, ein einfach aufgebautes Stützelement genügt.

Günstigerweise weist das Verbindungselement thermoplastisches Material auf und das thermoplastische Material ist durch Hinterspritzung auf der Rückseite des Innenverkleidungsteils mit dem Formteil verbunden.

In einer besonders einfachen Ausführung weist das Stützelement wenigstens eine Stützschicht auf. Das Stützelement bietet einen festen Unterbau unterhalb der Nutzschicht des Innenverkleidungsteils. Die Stützschicht kann starr ausgebildet sein, um den festigenden Effekt zu begünstigen.

Hilfreich ist es, wenn das Stützelement wenigstens ein Anschlussmittel aufweist, das mit dem Verbindungselement des Formteils zusammenpasst.

Eine Weiterbildung des Innenverkleidungsteils sieht vor, dass das mit der Stützschicht versehene Stützelement zusätzlich mit wenigstens einer Polsterschicht versehen ist. Die Polsterschicht ist auf jener Seite der Stützschicht angeordnet, die im montierten Zustand dem Formteil zugewandt ist. Während der Montage des Stützelements an dem Formteil wird die Polsterschicht mit dem Formteil in Kontakt gebracht. Dabei können die Kontaktflächen zusätzlich- miteinander verbunden sein, beispielsweise stoffschlüssig durch Schweißen oder Kleben. In dem Teilbereich, in dem die Polsterschicht mit dem Formteil in Kontakt kommt, kann die Trägerschicht des Formteils eine Aussparung aufweisen, damit die Polsterschicht des Stützelements unmittelbar an der Nutzschicht des Formteils anliegt.

Es können Stützelemente hergestellt werden, deren Polsterschichten unterschiedlich dimensioniert sind, insbesondere unterschiedliche Dicke aufweisen. Damit können dann Innenverkleidungsteile mit variierender Polsterungsqualität erzeugt werden. Des Weiteren kann die Konstruktion so ausgelegt sein, dass die Polsterschicht des Stützelements im montierten Zustand komprimiert ist. Dadurch wird eine feste Polsterung erhalten. Das Maß an Komprimierung sowie auch die Polsterdicke können variiert werden, wodurch eine Vielzahl an Kombinationsmöglichkeiten entsteht.

Auch die Trägerschicht des Formteils kann ein weichelastisches Material aufweisen. Wenn diese Trägerschicht mit einem Stützelement kombiniert wird, das mit einer Polsterschicht versehen ist, können die weichelastischen Eigenschaften der Trägerschicht (Formteil) und die weichelastischen Eigenschaften der Polsterschicht (Stützelement) aufeinander abgestimmt werden. Durch die Wahl unterschiedlicher weichelastischer Eigenschaften kann die Polsterqualität eingestellt werden. Selbstverständlich können die weichelastischen Eigenschaften von Polsterschicht und Trägerschicht auch identisch sein.

Um eine einfache Montage zu ermöglichen, weist das hinterspritzte Verbindungselement die Gestalt eines Verbindungspilzes auf, mit einem Hut, welcher der Trägerschicht zugewandt und mit dieser verbunden ist, sowie mit einem Verbindungsstiel, der von der Trägerschicht abgewandt ist und von dieser hervorsteht. Der Verbindungspilz ist Teil einer Steckverbindung. Das zweite Teil der Steckverbindung bildet das Anschlussmittel des Stützelements. Das Anschlussmittel ist komplementär gestaltet und ist vorzugsweise mit dem Verbindungspilz verrastbar.

Nachstehend sind Ausführungsbeispiele des erfindungsgemäßen Innenverkleidungsteils beispielhaft dargestellt sowie ein Verfahren zur seiner Herstellung anhand mehrerer schematischer Figuren detailliert beschrieben. Identische Merkmale der Ausführungsbeispiele sind mit den gleichen Bezugszeichen versehen.
Es zeigen:
- Fig. 1: ein Innenverkleidungsteil umfassend ein Formteil sowie ein daran montiertes separates Stützelement,
- Fig. 2a-c: drei Schritte der Vorfertigung eines Formteils,
- Fig. 3a-b: zwei Schritte zur Anbringung von Verbindungselemen- ten an das vorgefertigte Formteil mittels eines Spritzgießwerkzeugs,
- Fig. 3c: das Formteil gemäß Fig. 3b aus dem Spritzgießwerk- zeug entnommen,
- Fig. 4a-b: die Montage eines separaten Stützelements an das Formteil gemäß Fig. 4,
- Fig. 5: eine alternative Ausführung eines Innenverkleidungs- teils.

Fig. 1a stellt ein erfindungsgemäßes Innenverkleidungsteil 1 im Schnitt dar. Es weist ein Formteil 2 auf, an dem eine Stützstruktur 3 in Form eines separaten Stützelements 4 montiert ist.

Das Formteil 2 umfasst eine Nutzschicht 5, welche eine Vorderseite 1a des Innenverkleidungsteils 1 bildet und eine Trägerschicht 6, welche eine Rückseite 1b des Innenverkleidungsteils 1 bildet. Die Nutzschicht 5 besteht aus einer dekorativen Folie mit thermoplastischen Eigenschaften. Die Trägerschicht 6 weist ein weichelastisches Schaumstoffmaterial auf. Dieses hat thermoplastische Eigenschaften, damit es unter Wärme und Druck umgeformt werden kann. Die Trägerschicht 6 ist mit einer Aussparung 7 für das Stützelement 4 versehen. Dieses weist eine Stützschicht 8 und eine zusätzliche Polsterschicht 9 auf. Die Polsterschicht 9 des Stützelements 4 reicht bei diesem Ausführungsbeispiel durch die Aussparung 7 der Trägerschicht 6 des Formteils 2 hindurch und hat unmittelbaren Kontakt mit der Nutzschicht 5 des Formteils 2. Die Nutzschicht 5 ist nachgiebig. Sie kann sich bei einer von außen einwirkenden Kraft gemeinsam mit der darunterliegenden Polsterschicht 9 elastisch verformen und bei Wegnahme der Kraft in ihre neutrale Gestalt zurückkehren.

Zwecks Verbindung des Stützelements 4 an dem Formteil 2 sind Verbindungselemente 10 an der Trägerschicht 6 des Formteils 2 angebracht. Das Stützelement 4 weist Anschlussmittel 11 auf, die mit den Verbindungselementen 10 des Formteils 2 zusammenpassen. Jedes Verbindungselement 10 ist mit einem Hut 10a und einem Verbindungsstiel 10b versehen, der von der Trägerschicht 6 des Formteils 2 hervorsteht. Die Anschlussmittel 11 weisen Durchstecköffnungen 11a auf. Die Verbindungsstiele 10b durchdringen die Durchstecköffnungen 11a. Zur Sicherung der zusammengesteckten Durchsteckverbindung ist an dem freien Ende des Verbindungsstiels 10b jeweils ein Klemmelement 12 befestigt, welches der in Fig. 1b in zwei Ansichten dargestellten Klemmscheibe 12a entspricht.

Die Figuren 2a bis 2c stellen ein Beispiel für die Vorfertigung eines Formteils 2 dar. Die Trägerschicht 6 und die Nutzschicht 5 werden zunächst erwärmt, wie in Fig. 2a anhand einer schematisch dargestellten oberen Heizwendel 15 und einer unteren Heizwendel 16 symbolisiert. Die Formgebung erfolgt mittels eines Formwerkzeugs 17. Fig. 2b zeigt dieses Formwerkzeug 17 mit einem ersten oberen Werkzeugteil 17a und einem zweiten unteren Werkzeugteil 17b in geöffnetem Zustand. In Fig. 2c sind das obere Werkzeugteil 17a und das untere Werkzeugteil 17b aufeinander zu bewegt. Die geschlossenen Werkzeugteile 17a/17b haben dem Material der Trägerschicht 6 und der Nutzschicht 5 eine Gestalt verliehen. Nach dem Ausformen behält das Formteil 2 diese Gestalt bei.

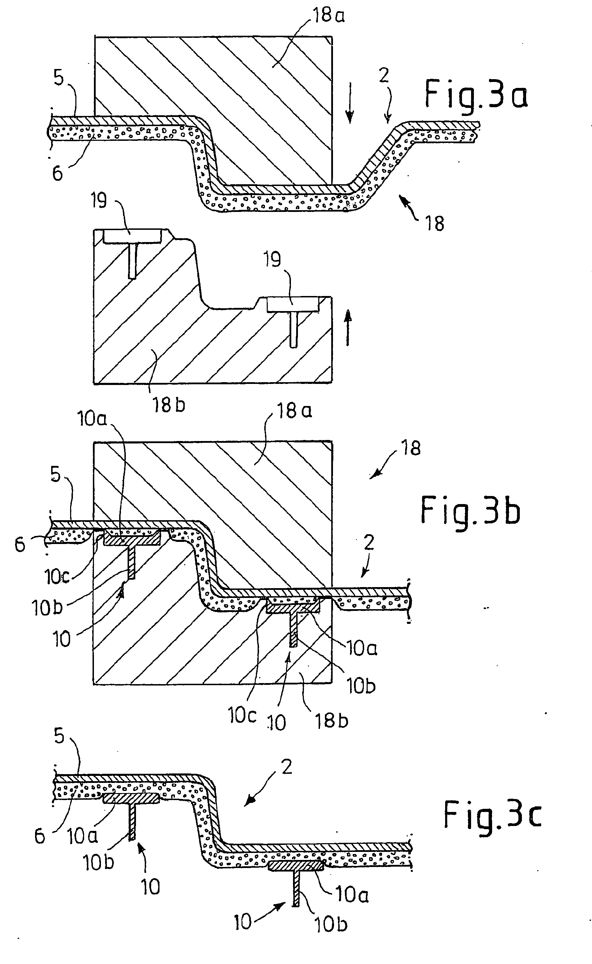

Die Figuren 3a bis 3c veranschaulichen die Weiterverarbeitung des in Fig. 2c erkennbaren Formteils 2, an das nun noch Verbindungselemente 10 angebracht werden müssen. Nach Fig. 3a wird hierfür ein Spritzgießwerkzeug 18 mit einem ersten oberen Werkzeugteil 18a und einem zweiten unteren Werkzeugteil 18b verwendet. Das untere Werkzeugteil 18b weist zwei Formbereiche 19 auf, die jeweils zur Herstellung eines Verbindungselements 10 vorgesehen sind. In Fig. 3b ist der geschlossene Zustand der Werkzeugteile 18a/18b dargestellt. In die erwähnten Formbereiche 19 ist thermoplastisches Material eingespritzt. Das thermoplastische Material bildet an der Trägerschicht 6 des Formteils 2 die Verbindungselemente 10 aus, nämlich zwei Verbindungspilze P. Jeder Verbindungspilz P weist einen Hut 10a auf, mit dem er an der Trägerschicht 6 des Formteils 2 angespritzt ist. Außerdem ist an dem Hut 10a ein Verbindungsstiel 10b angeordnet, der von der Trägerschicht 6 hervorsteht. Der Hut 10a weist der Nutzschicht 5 zugewandt einen Hutrand 10c auf. Das zweite Werkzeugteil 18b ist so gestaltet, dass der Schaumstoff der Trägerschicht 6 am Rand des Formbereichs 19 stark komprimiert wird, damit das thermoplastische Spritzgussmaterial nicht zwischen den Schaumstoffporen entweichen kann. Der angespritzte Verbindungspilz P kann zumindest an seinem Hutrand 10c bis an die Nutzschicht 5 heranreichen oder er ist nur oberflächlich mit der Trägerschicht 6 verbunden.

Ein Ausführungsbeispiel für das ausgeformte Formteil 2 mit hinterspritzten Verbindungselementen 10 zeigt Fig. 3c. Danach haftet der Hut 10a des Verbindungspilzes P durch Adhäsion an der Trägerschicht 6 des Formteils 2. Das Schaumstoffmaterial der Trägerschicht 6 kann nach der Hinterspritzung verdichtet bleiben. Dadurch weist es unter den Verbindungspilzen P eine geringere Dicke auf als neben den Verbindungspilzen.

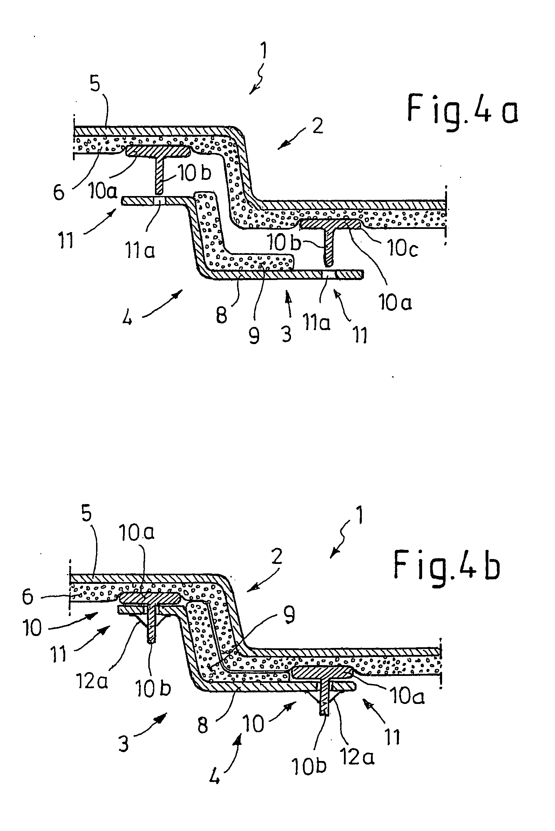

Das Prinzip der Montage eines Innenverkleidungsteils 1 ist in den Figuren 4a und 4b schematisch dargestellt.

Nach Fig. 4a werden das Formteil 2 und das Stützelement 4 zwecks Montage aufeinander zu bewegt. Wiederum weist das Stützelement 4 eine Stützschicht 8 und eine Polsterschicht 9 auf. Das Formteil 2 unterscheidet sich jedoch von dem in Fig. 1a gezeigten Formteil 2, weil seine Trägerschicht 9 keine Aussparung aufweist. Die Polsterschicht 9 des Stützelements 4 hat somit keinen Kontakt mit der Nutzschicht 5 des Formteils 2. Stattdessen berührt die Polsterschicht 9 die weichelastische Trägerschicht 6 des Formteils 2.

Die Stützschicht 8 ist mit Anschlussmitteln 11 in Form von Durchstecköffnungen 11a versehen. Das Formteil 2 ist mit hinterspritzten Verbindungselementen 10 versehen, die einen Hut 10a und einen Verbindungsstiel 10b aufweisen. Die Durchstecköffnungen 11a des Stützelements 4 passen jeweils auf einen der Verbindungsstiele 10b des Formteils 2. Es entsteht eine Durchsteckverbindung gemäß Fig. 4b. Zur Sicherung dieser Durchsteckverbindung ist an dem freien Ende jedes Verbindungsstiels 10b jeweils ein Klemmelement 12 angefügt. Hierbei handelt es sich um eine Klemmscheibe, wie in Fig. 1b gezeigt. Die Klemmscheibe 12a klemmt an dem Verbindungsstiel 10b fest und verhindert dadurch ein Auseinanderbewegen von Stützelement 4 und Formteil 2.

Die Polsterschicht 9 des Stützelements 4 ist im montierten Zustand gegen die Trägerschicht 6 des Formteils 2 gedrückt. Dadurch werden die Trägerschicht 6 und die Polsterschicht 9 verdichtet und fester.

Die Qualität der Trägerschicht 6 und der Polsterschicht 9 können identisch oder unterschiedlich sein. Durch geeignete Wahl und Kombination dieser beiden Schichten kann die Polsterung des Innenverkleidungsteils 1 in gewünschter Weise angepasst sein, um eine qualitativ höherwertige oder eine einfachere Schnittstelle für die taktile Wahrnehmung zu bilden.

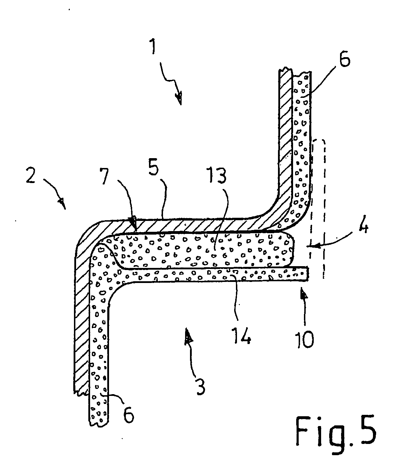

Ein weiteres Ausführungsbeispiel eines Innenverkleidungsteils 1 ist in Fig. 5 dargestellt. Danach ist das Formteil 2 mit einer Nutzschicht 5 und einer besonderen Trägerschicht 6 ausgebildet. Es ist eine Stützstruktur 3 vorgesehen, die ein separates Stützelement 4 aufweist, das als Polsterschicht 13 ausgebildet ist. Es handelt sich um ein Innenverkleidungsteil 1 mit einer Armlehne im Teilbereich der Stützstruktur 3. Die Trägerschicht 6 des Formteils 2 weist ein Verbindungsmittel 10 auf, welches das als Polsterschicht 13 ausgebildete Stützelement 4 lagert. Zwecks Lagerung des Stützelements 4 ist das Verbindungsmittel 10 als Konsolenelement 14 ausgebildet. Das Konsolenelement 14 trägt die Polsterschicht 13. Letztere ist zwischen dem Konsolenelement 14 und der Nutzschicht 5 des Formteils 2 eingefasst. Die Trägerschicht 6 weist außerdem eine Aussparung 7 auf. Die Polsterschicht 13 hat unmittelbaren Kontakt mit der Nutzschicht 5 des Formteils 2.

### Bezugszeichenliste

- 1: Innenverkleidungsteil
- 2: Formteil
- 3: Stützstruktur
- 4: Stützelement
- 5: Nutzschicht
- 6: Trägerschicht
- 7: Aussparung
- 8: Stützschicht
- 9: Polsterschicht
- 10: Verbindungselement
- 10a: Hut
- 10b: Verbindungsstiel
- 11: Anschlussmittel
- 11a: Durchstecköffnung
- 12: Klemmelement
- 12a: Klemmscheibe
- 13: Polsterschicht
- 14: Konsolenelement
- 15: Heizwendel
- 16: Heizwendel
- 17: Formwerkzeug
- 17a: Erstes oberes Werkzeugteil
- 17b: Zweites unteres Werkzeugteil
- 18: Spritzgießwerkzeug
- 18a: Erstes oberes Werkzeugteil
- 18b: Zweites unteres Werkzeugteil
- 19: Formbereich

## Patentansprüche

1. Innenverkleidungsteil (1) für einen Fahrgastraum eines Fahrzeug, mit einem Formteil (2), das eine Vorderseite aufweist, welche eine dekorative Nutzschicht (5) des Innenverkleidungsteils (1) bildet, und mit wenigstens einer Trägerschicht (6), welche eine Rückseite des Innenverkleidungsteils (1) bildet, wobei zumindest ein Teilbereich des Innenverkleidungsteils (1) mit wenigstens einer Stützstruktur versehen ist, die eine angenehme taktile Wahrnehmung an der Oberfläche des Teilbereichs schafft, **dadurch gekennzeichnet, dass** das Formteil (2) wenigstens ein Verbindungselement (10) aufweist, welches an der Trägerschicht (6) der Rückseite des Innenverkleidungsteils (1) angebracht ist, dass die Stützstruktur als separates Stützelement (4) ausgebildet und von dem Verbindungselement (10) des Formteils (2) gehalten ist.

2. Innenverkleidungsteil (1) nach Anspruch 1, **dadurch gekennzeichnet, dass** das Verbindungselement (10) thermoplastisches Material aufweist, dass das thermoplastische Material durch Hinterspritzung auf der Rückseite des Innenverkleidungsteils (1) mit dem Formteil (2) verbunden ist.

3. Innenverkleidungsteil (1) nach Anspruch 1 oder 2, **dadurch gekennzeichnet, dass** das Stützelement (4) wenigstens eine Stützschicht (8) aufweist.

4. Innenverkleidungsteil (1) nach einem der Ansprüche 1 bis 3, **dadurch gekennzeichnet, dass** das Stützelement (4) wenigstens ein Anschlussmittel (11) aufweist, das mit dem Verbindungselement (10) des Formteils (2) zusammenpasst.

5. Innenverkleidungsteil (1) nach einem der Ansprüche 1 bis 4, **dadurch gekennzeichnet, dass** das Stützelement (4) mit wenigstens einer Polsterschicht (9) versehen ist.

6. Innenverkleidungsteil (1) nach einem der Ansprüche 1 bis 5, **dadurch gekennzeichnet, dass** die Trägerschicht (6) aus einem weichelastischen Material hergestellt ist.

7. Innenverkleidungsteil (1) nach einem der Ansprüche 1 bis 6, **dadurch gekennzeichnet, dass** das hinterspritzte Verbindungselement (10) die Gestalt eines Verbindungspilzes aufweist mit einem Hut (10a), welcher der Trägerschicht (6) zugewandt und mit dieser verbunden ist, sowie mit einem Verbindungsstiel (10b), der von der Trägerschicht (6) abgewandt ist und von dieser hervorsteht.

8. Verfahren zur Herstellung eines Innenverkleidungsteils (1) für einen Fahrgastraum eines Fahrzeugs, wobei das Innenverkleidungsteil (1) eine Vorderseite mit einer dekorativen Nutzschicht (5) und darunter wenigstens eine Trägerschicht (6) aufweist, welche die Rückseite bildet, und wobei zumindest ein Teilbereich des Innenverkleidungsteils (1) mit einer Stützstruktur versehen ist, die eine angenehme taktile Wahrnehmung an der Oberfläche des Teilbereichs schafft, umfassend folgenden Schritt:
- Herstellen eines Formteils (2) mit einer dekorativen Nutzschicht (5) und wenigstens einer Trägerschicht (6),
**gekennzeichnet durch** folgende Schritte:
- Einlegen des fertigen Formteils (2) in ein Spritzgießwerkzeug (18),
- Anbringen wenigstens eines Verbindungselements (10) in dem Teilbereich an der Rückseite des Innenverkleidungsteils (1) **durch** Hinterspritzung der Trägerschicht (6) mittels des Spritzgießwerkzeugs (18),
- Entnahme des hinterspritzten Formteils (2) aus dem Spritzgießwerkzeug (18),
- Herstellen wenigstens einer Stützstruktur (3) als separates Stützelement (4) mit wenigstens einem Anschlussmittel (11) passend zu dem an der Trägerschicht (6) angebrachten Verbindungselement (10) des Formteils (2),
- Montage des Stützelements (4) an dem Formteil (2) durch Verbindung des Anschlussmittels (11)des Stützelements (4) mit dem Verbindungselement (10) des Formteils (2).

## Claims

1. Interior cladding part (1) for a vehicle passenger area, comprising a molded part (2) having a front side forming a decorative top layer (5) of the interior cladding part and at least one supporting layer (6) forming the rear side o the interior cladding part (1), wherein at least a section of the interior cladding part (1) is provided with at least one supporting structure which provides a comfortable tactile feeling on the surface of the section, **characterized in that** the molded part (2) includes at least on connecting element (10) that is provided on the supporting layer (6) of the rear side of the interior cladding part (1) and that the supporting structure is formed as a separate supporting element (4) and is held by the connecting element (10) of the molded part (2).

2. Interior cladding part (1) according to claim 1, **characterized in that** the connecting element (10) comprises a thermoplastic material and that the thermoplastic material is connected to the molded part (2) on the rear side of the interior cladding part (1) by means of back injection moulding.

3. Interior cladding part (1) according to claim 1 or 2, **characterized in that** the supporting element (4) comprises at least one supporting layer (8).

4. Interior cladding part (1) according to one of the claims 1 to 3, **characterized in that** the supporting element (4) comprises at least one connection means (11) matching the connecting element (10) of the molded part (2).

5. Interior cladding part (1) according to one of the claims 1 to 4, **characterized in that** the supporting element (4) is provided with at least one cushioning layer (9).

6. Interior cladding part (1) according to one of the claims 1 to 5, **characterized in that** the supporting layer (6) is made from a soft-elastic material.

7. Interior cladding part (1) according to one of the claims 1 to 6, **characterized in that** the back injection molded connecting element (10) is in a mushroom shape having a hat (10a) that faces and is connected to the supporting layer (6), and having a connecting stem (10b) that faces away and protrudes from the supporting layer (6).

8. Method for the production of an interior cladding part (1) for a vehicle passenger area, said interior cladding part (1) having a front side with a decorative top layer (5) and at least one supporting layer (6) underneath thereof and forming the rear side, and at least one section of the interior cladding part (1) being provided with a supporting structure providing a comfortable tactile feeling on the surface of the section, said method comprising the following step:
- producing a molded part (2) with a decorative top layer (5) and at least one supporting layer (6),
**characterized by** the following steps :
- placing the finished molded part (2) into a back injection moulding tool (18),
- attaching at least one connecting element (10) to a section on the rear side of the interior cladding part (1) by back injection moulding of the supporting layer (6) using an injection tool (18),
- removing the back injection molded part (2) from the injection tool (18),
- producing at least one supporting structure (3) as a separate supporting element (4), with at least one connection means (11) that matches the connecting element (10) of the molded part (2) applied on the supporting layer (6).
- mounting of the supporting element (4) to the molded part (2) by connecting the connection means (11) of the supporting element (4) to the connecting element (10) of the molded part (2).

## Revendications

1. Élément d'habillage intérieur (1) pour un espace passager d'un véhicule, avec une pièce moulée (2) ayant une face formant une couche utilitaire décorative (5) de l'élément d'habillage intérieur (1) et avec au moins une couche porteuse (6) formant une face arrière de l'élément d'habillage (1), au moins une section de l'élément d'habillage intérieur (1) étant munie d'une structure de support donnant une perception tactile agréable sur la surface de la section, **caractérisé en ce que** la pièce moulée (2) comporte au moins un élément de liaison (10) prévu sur la couche porteuse (6) de la face arrière de l'élément d'habillage intérieur (1) et **en ce que** la structure de support est en forme d'élément de support séparé (4) et est supporté par l'élément de liaison (10) de la pièce moulée (2).

2. Élément d'habillage intérieur (1) selon la revendication 1, **caractérisé en ce que** l'élément de liaison (10) comporte de matériel thermoplastique et **en ce que** le matériel thermoplastique est relié à la pièce moulée sur la surface arrière de l'élément d'habillage intérieur (1) par surmoulage par injection.

3. Élément d'habillage intérieur (1) selon les revendications 1 ou 2, **caractérisé en ce que** l'élément de support (4) comporte au moins une couche de support (8).

4. Élément d'habillage intérieur (1) selon l'une des revendications 1 à 3, **caractérisé en ce que** l'élément de support (4) comporte au moins un moyen de raccordement (11) se complétant avec l'élément de liaison (10) de la pièce moulée (2).

5. Élément d'habillage intérieur (1) selon l'une des revendications 1 à 4, **caractérisé en ce que** l'élément de support (4) est muni d'au moins une couche de rembourrage (9).

6. Élément d'habillage intérieur (1) selon l'une des revendications 1 à 5, **caractérisé en ce que** la couche porteuse (6) est fabriquée d'un matériel élastique souple.

7. Élément d'habillage intérieur (1) selon l'une des revendications 1 à 6, **caractérisé en ce que** l'élément de liaison (10) surmoulé par injection est en forme de champignon de connexion ayant un chapeau (10a) tourné vers et relié à la couche porteuse (6) et ayant une tige de connexion (10b) détournée de et faisant saillie sur la couche porteuse (6).

8. Procédé de fabrication d'un élément d'habillage intérieur (1) pour un espace passager d'un véhicule, l'élément d'habillage intérieur (1) ayant une face avec une couche utilitaire décorative (5) et en dessous au moins une couche porteuse (6) formant la face arrière, et au moins une section de l'élément d'habillage intérieur (1) étant munie d'une structure de support donnant une perception tactile agréable sur la surface de la section, comportant l'étape suivante :
- la fabrication d'une pièce moulée (2) avec une couche utilitaire décorative (5) et avec au moins une couche porteuse (6),
**caractérisé par** les étapes suivantes :
- la mise en place de la pièce moulée finie (2) dans un outil à moulage par injection (18),
- l'apposition d'au moins un élément de liaison (10) dans une section sur la face arrière de l'élément d'habillage intérieur (1) par surmoulage par injection de la couche porteuse (6) en utilisant l'outil à moulage par injection (18),
- le prélèvement de la pièce moulée par injection (2) hors de l'outil à moulage par injection (18),
- la fabrication d'au moins une structure de support (3) comme d'élément de support séparé (4) avec au moins un moyen de raccordement (11) correspondant à l'élément de liaison (10) de la pièce moulée (2) fixé sur la couche porteuse (6),
- le montage de l'élément de support (4) sur la pièce moulée (2) par la connexion du moyen de raccordement (11) de l'élément de support (4) à l'élément de liaison (10) de la pièce moulée (2).
